(19) Europäisches Patentamt
European Patent Office
Office européen des brevets

(11) **EP 2 581 242 A1**

(12) **EUROPEAN PATENT APPLICATION**
published in accordance with Art. 153(4) EPC

(43) Date of publication:
**17.04.2013 Bulletin 2013/16**

(51) Int Cl.:
***B60H 1/22*** (2006.01)   ***F25B 49/02*** (2006.01)

(21) Application number: **11792303.7**

(22) Date of filing: **27.05.2011**

(86) International application number:
**PCT/JP2011/062211**

(87) International publication number:
**WO 2011/155346 (15.12.2011 Gazette 2011/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.06.2010 JP 2010133542**

(71) Applicant: **Sanden Corporation
Isesaki-shi, Gunma 372-8502 (JP)**

(72) Inventors:
• **ISHIZEKI, Tetsuya
Isesaki-shi, Gunma 372-8502 (JP)**

• **INOUE, Atsuo
Isesaki-shi, Gunma 372-8502 (JP)**
• **TSUBOI, Masato
Isesaki-shi, Gunma 372-8502 (JP)**
• **SUZUKI, Kenichi
Isesaki-shi, Gunma 372-8502 (JP)**
• **TAGAMI, Shinji
Isesaki-shi, Gunma 372-8502 (JP)**

(74) Representative: **Prüfer & Partner GbR
European Patent Attorneys
Sohnckestrasse 12
81479 München (DE)**

(54) **VEHICLE AIR-CONDITIONING DEVICE, AND REFRIGERANT LEAKAGE DIAGNOSIS METHOD FOR VEHICLE AIR-CONDITIONING DEVICE**

(57) In a vehicle air-conditioning device, refrigerant leakage is diagnosed precisely without any restrictions from an operating condition of the air-conditioning device. When the operating condition of the vehicle air-conditioning device is stable, a threshold value Th for determination of refrigerant leakage is set based on an outlet pressure Pd and an inlet pressure Ps of a compressor. Furthermore, a volume flow Gr in that refrigerant pipe running from a condenser to an expansion valve through which the refrigerant circulates in a liquid state is detected. When it is determined that the volume flow Gr exceeds the threshold value Th for determination of refrigerant leakage, a diagnosis result (alarm) indicating that the refrigerant leaks is output.

FIG.3

EP 2 581 242 A1

## Description

TECHNICAL FIELD

The present invention relates to a vehicle air-conditioning device, and more specifically, to a technique to diagnose whether or not any refrigerant leakage occurs.

BACKGROUND ART

In a heat-pump air-conditioning device, when refrigerant leaks, adverse effects such as performance decrements are caused. In view of this, Patent Document 1 discloses such a technique that refrigerant flow is measured, and when the measured value greatly deviates from a value obtained in a normal condition, it is determined that some refrigerant leakage occurs.

CITATION LIST

PATENT DOCUMENT

Patent Document 1: Japanese Laid-Open Patent Application Publication No. H7(1995)-151432

SUMMARY OF THE INVENTION

PROBLEMS TO BE SOLVED BY THE INVENTION

As disclosed in Patent Document 1, in a case of an air-conditioning device which is disposed in a showcase and operated therein normally, it is possible to determine whether or not any refrigerant leakage occurs by setting one threshold value for determination. However, in a case of a vehicle air-conditioning device, since a refrigerant flow varies greatly because of a great change or the like of a rotational speed of an engine for driving a compressor, it has been difficult to precisely determine whether or not any refrigerant leakage occurs, based on one threshold value for determination to be driven, without any restrictions from an operating condition.

The present invention has been achieved in view of such a conventional problem, and an object of the present invention is to precisely diagnose refrigerant leakage in a vehicle air-conditioning device by a simple configuration without any restrictions from an operating condition of the air-conditioning device.

MEANS FOR SOLVING THE PROBLEMS

In view of this, the present invention is a vehicle air-conditioning device (a refrigerant leakage diagnosis method thereof) in which a compressor, a condenser, an expansion valve, and an evaporator are connected in a circular manner through refrigerant pipes, and is configured to include the following units (steps):

A. a unit (step) for detecting a refrigerant volume flow in an area in which refrigerant circulates in a liquid state in the vehicle air-conditioning device;

B. a unit (step) for setting a threshold value for determination of refrigerant leakage in a variable manner based on an operating condition of the vehicle air-conditioning device; and

C. a unit (step) for determining that the refrigerant is leaking when the detected refrigerant volume flow exceeds the threshold value for determination of refrigerant leakage.

ADVANTAGEOUS EFFECT OF THE INVENTION

In a vehicle air-conditioning device, when refrigerant leaks, an amount of refrigerant becomes insufficient and a refrigerant density decreases. This makes it difficult for the refrigerant to condense in a condenser sufficiently and causes gaseous refrigerant to be mixed even in an area such as a condenser downstream in which the refrigerant is in a liquid state when no refrigerant leakage occurs, thereby causing a gas-liquid mixing state. If a volume flow of the refrigerant in such a gas-liquid mixing state including the gaseous refrigerant having a low density is detected by a refrigerant flow detecting unit, the volume flow greatly increases as compared with that volume flow of the refrigerant in a liquid state which is detected in a normal condition.

Furthermore, a flow of the refrigerant in a liquid state in the normal condition also varies depending on an operating condition of the air-conditioning device.
In view of this, with the use of a threshold value for determination of refrigerant leakage which is set to be changeable according to variations of the refrigerant flow caused due to variations of the operating condition, it is possible to precisely determine whether or not any refrigerant leakage occurs, without any restrictions from the operating condition of the air-conditioning device.

BRIEF DESCRIPTION OF THE DRAWINGS

Fig. 1 is a schematic view illustrating a refrigerant circuit in a vehicle air-conditioning device according to the present invention.
Fig. 2 is a flowchart illustrating a first embodiment of refrigerant leakage diagnosis in the vehicle air-conditioning device.
Fig. 3 is a flowchart illustrating a second embodiment of the refrigerant leakage diagnosis.
Fig. 4 is a flowchart illustrating a third embodiment of the refrigerant leakage diagnosis.
Fig. 5 is a flowchart illustrating a fourth embodiment of the refrigerant leakage diagnosis.
Fig. 6 is a view illustrating a setting method of a threshold value for determination of refrigerant leakage to be used for the refrigerant leakage diagnosis in the first embodiment.

Fig. 7 is a view illustrating a setting method of a threshold value for determination of refrigerant leakage to be used for the refrigerant leakage diagnosis in second to fourth embodiments and sixth to eighth embodiments.

Fig. 8 is a flowchart illustrating a fifth embodiment of the refrigerant leakage diagnosis.

Fig. 9 is a flowchart illustrating a sixth embodiment of the refrigerant leakage diagnosis.

Fig. 10 is a flowchart illustrating a seventh embodiment of the refrigerant leakage diagnosis.

Fig. 11 is a flowchart illustrating an eighth embodiment of the refrigerant leakage diagnosis.

DESCRIPTION OF EMBODIMENTS

The following describes embodiments of the present invention.

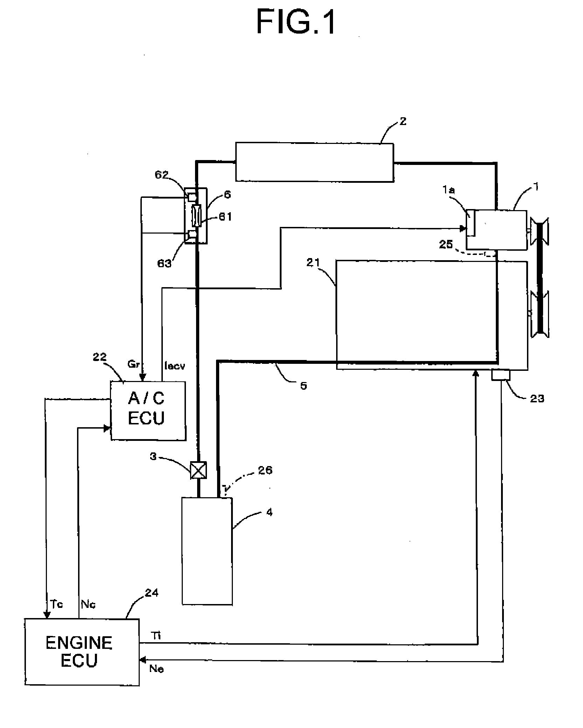

Fig. 1 illustrates a refrigerant circuit in a vehicle air-conditioning device according to the present invention.

The refrigerant circuit is configured such that a variable-capacity compressor 1, a condenser 2, an expansion valve 3, and an evaporator 4 are connected in a circular manner through refrigerant pipes 5.

The variable-capacity compressor 1 drives a valve element for opening and closing communication between a discharge side and an inlet side by controlling an amount of electricity of a capacity control valve 1a provided therein, and controls a discharge capacity (a stroke of a plunger) in a variable manner by adjusting an intake pressure (= inlet pressure Ps) (see, in particular, Japanese Laid-Open Patent Publication No. 2003-301772).

The compressor 1 is driven by an engine (an internal combustion engine) 21, and gaseous refrigerant discharged from the compressor 1 at a high pressure and a high temperature reaches the condenser 2, in which the gaseous refrigerant is cooled down by heat exchange with air stream (external air) passing nearby while having contact with an external surface of the condenser 2, so that the gaseous refrigerant is turned into condensate liquid.

The liquid-state refrigerant flowed out from the condenser 2 is expanded and depressurized by the expansion valve 3, and then reaches the evaporator 4 disposed in the interior of a vehicle. After the liquid-state refrigerant is evaporated and gasified in the evaporator 4 by heat exchange with air circulated and blown in the interior of a vehicle by a fan (not illustrated), the refrigerant is inhaled into the compressor 1 again and compressed

Thus, cooled air is sent into the interior of a vehicle, so that air-conditioning is performed.

In such a vehicle air-conditioning device, a device for diagnosing whether or not any refrigerant leakage occurs is configured as follows.

A volume-flow sensor 6 for detecting a volume flow of the liquid-state refrigerant is disposed in that refrigerant pipe 5 provided between an outlet of the condenser 2 and the expansion valve 3 through which the liquid-state refrigerant flows. This volume-flow sensor 6 includes an orifice 61 provided in series between refrigerant pipes 5 and one pair of pressure sensors 62 and 63 for detecting pressures on an upstream side and a downstream side thereof, and is configured to calculate a volume flow based on the detected pressure values of the upstream side and the downstream side. Any volume-flow sensors such as an impeller type may be usable besides the above one, provided that they can measure a volume flow.

The detected pressure values of the one pair of pressure sensors 62 and 63 are output to an air-conditioning/electronic control unit (hereinafter referred to as the A/C ECU) 22, and the A/C ECU 22 calculates a volume flow Gr of the refrigerant based on the detected pressure values.

In the engine 21, a rotational speed sensor 23 for detecting an engine speed Ne is disposed, and a detected value of the engine speed from the rotational speed sensor 23 is output to an engine control unit (hereinafter referred to as the engine ECU) 24.

The engine ECU 24 performs engine control such as setting a fuel injection amount Ti based on the engine speed Ne and other detected values to output it to a fuel injection device of the engine 21. In the meantime, the engine ECU 24 calculates a compressor rotational speed Nc which is proportional to the engine speed, and outputs it to the A/C ECU 22.

The A/C ECU 22 outputs a controlled current value Iecv to the capacity control valve 1 a of the compressor 1 so that a necessary refrigerant flow is obtained based on the calculated refrigerant volume flow Gr and compressor rotational speed Nc.

Furthermore, the A/C ECU 22 calculates a rotation torque Tc of the compressor 1 based on the refrigerant volume flow Gr, the compressor rotational speed Nc, and the like, and outputs a signal of the rotation torque Tc to the engine ECU 24. Hereby, for example, the engine ECU 24 corrects the fuel injection amount of the engine 21 to be increased as the rotation torque Tc of the compressor 1 is greater, thereby increasing an output torque Te of the engine 21 so that rotational variations of the compressor 1 can be suppressed.

Further, the A/C ECU 22 diagnoses whether or not any refrigerant leakage occurs, based on the detected refrigerant volume flow Gr.

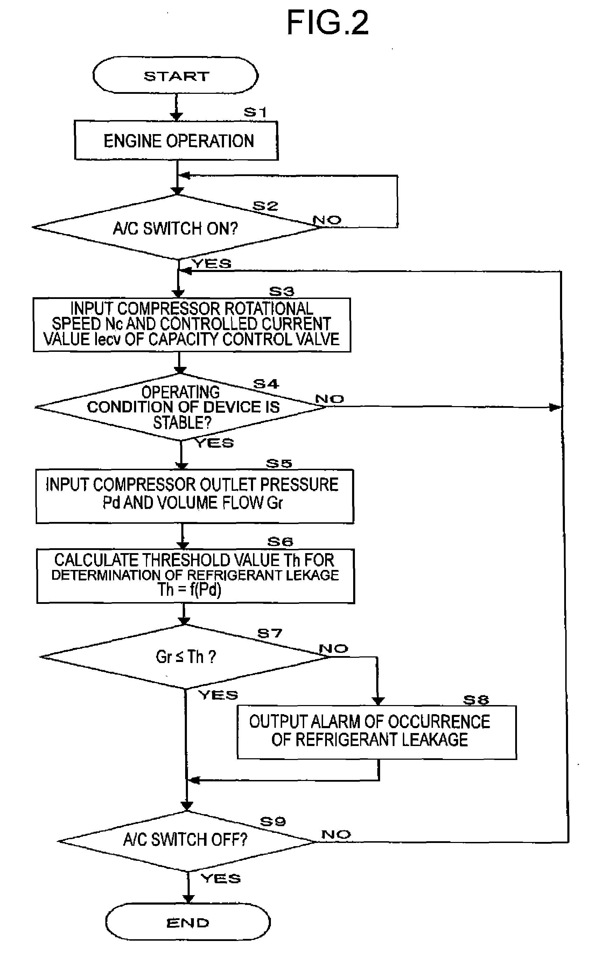

Fig. 2 illustrates a flow of a first embodiment of refrigerant leakage diagnosis.

After the engine 21 is started (an ignition switch is turned ON) in step S1, it is determined whether or not an air-conditioning switch is turned ON, in step S2.

When it is determined that the air-conditioning switch is turned ON, the process advances to step S3, in which a compressor rotational speed Nc and a controlled current value Iecv to the capacity control valve 1 a are input.

In step S4, it is determined whether or not a variation amount (a change amount within a predetermined time) of the compressor rotational speed Nc and a variation amount (a change amount within a predetermined time) of the controlled current value Iecv are within their respective threshold values and it is determined whether or not an operating condition of the air-conditioning device is stable. This determination is performed so as to suppress wrong diagnosis due to variations in a transient state.

When it is determined that the operating condition is stable, the process advances to step S5, in which an outlet pressure Pd of the compressor 1 and a refrigerant volume flow Gr are input. Here, the outlet pressure Pd of the compressor 1 is a refrigerant pressure on a high-pressure side of the vehicle air-conditioning device. Subsequently, in step S6, a threshold value Th for determination of refrigerant leakage is calculated as a function f(Pd) of the outlet pressure Pd of the compressor 1.

More specifically, a maximum flow of the volume flow of the liquid-state refrigerant in such a state in which no refrigerant leaks is set as a basis. The reason is as follows.

When the refrigerant leaks, a total amount of the refrigerant flowing through the air-conditioning device becomes insufficient and a refrigerant density decreases. This makes it difficult for the refrigerant to condense in a condenser sufficiently and causes gaseous refrigerant to be mixed even in an area such as a condenser downstream in which the refrigerant is in a liquid state when no refrigerant leakage occurs. This accordingly causes a gas-liquid mixing state.

If a volume flow of the refrigerant in such a gas-liquid mixing state including the gaseous refrigerant having a low density is detected by a refrigerant flow detecting unit, the volume flow increases greatly as compared with a volume flow of the refrigerant in a liquid state which is detected in a normal condition, and exceeds even the maximum volume flow of the liquid-state refrigerant.

In view of this, the threshold value Th for determination of refrigerant leakage is set as the basis of the maximum flow of the volume flow of the liquid-state refrigerant in the normal condition as described above, thereby making it possible to determine the leakage of the refrigerant with high accuracy.

Here, the volume flow is obtained from a differential pressure between an outlet pressure Pd and an inlet pressure Ps of the compressor 1 and an opening degree of the expansion valve 3, and the volume flow reaches its maximum flow when the opening degree of the expansion valve 3 is largest in an operating condition causing the differential pressure (= Pd - Ps). Note that if the refrigerant leaks and gaseous refrigerant is mixed, the differential pressure increases and an apparent volume flow will increase. Since a change amount of the inlet pressure Ps is small as compared with a change amount of the outlet pressure Pd, a flow obtainable when the inlet pressure Ps is assumed constant and the opening degree of the expansion valve 3 is assumed largest is calculated as a possible maximum flow, for example, and a threshold value Th for determination of refrigerant leakage is set based on this value. For example, the value of the basis or a value obtained by increasing or decreasing this value by a predetermined amount is set as the threshold value Th for determination of refrigerant leakage.

Alternatively, a possible maximum flow corresponding to outlet pressure Pd in actual control is obtained by an experiment (a practical vehicle test, a bench test, etc.), simulation, or the like, and the threshold value Th for determination of refrigerant leakage may be set based on the maximum flow corresponding to outlet pressure Pd.

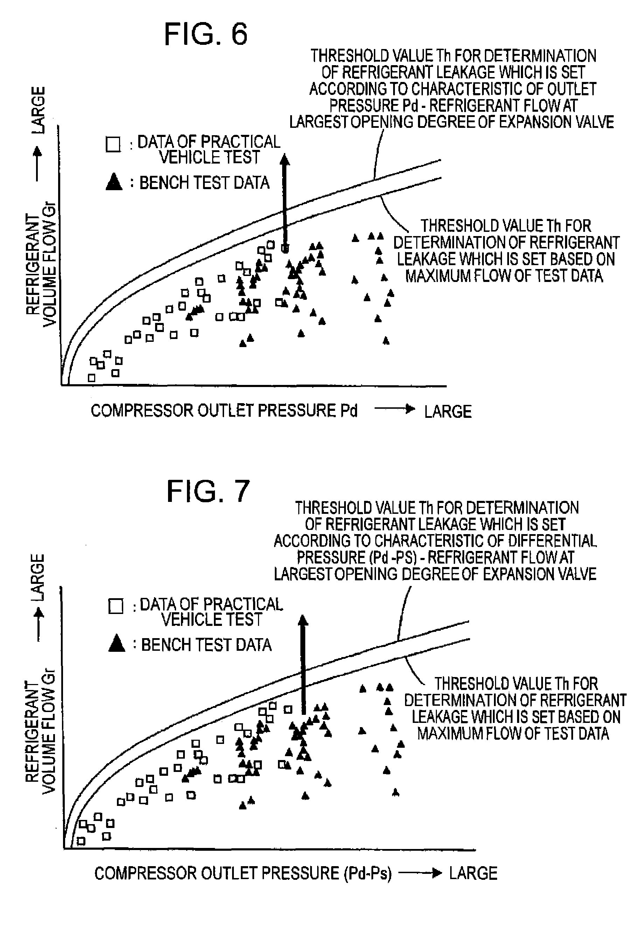

More specifically, by use of variables X and Y obtained from test data of the characteristic of the refrigerant volume flow Gr with respect to the outlet pressure Pd of the compressor 1 as illustrated in Fig. 6, the following formula can be set:

$$Th = X \cdot Pd^{1/2} + Y$$

In step S7, the refrigerant volume flow Gr input in step S5 is compared with the threshold value Th for determination of refrigerant leakage set in step S6, and it is determined whether or not the refrigerant volume flow Gr is less than or equal to the threshold value Th for determination of refrigerant leakage.

If the refrigerant volume flow Gr is less than or equal to the threshold value Th for determination of refrigerant leakage, it is determined that no refrigerant leakage occurs, and the process advances to step S9.

On the other hand, if it is determined that the refrigerant volume flow Gr is greater than the threshold value Th for determination of refrigerant leakage, such a diagnosis result is given that refrigerant leakage occurs. When the refrigerant leakage occurs, the refrigerant is in the gas-liquid mixing state as mentioned earlier, and therefore, the volume flow increases and largely exceeds the possible maximum flow for the liquid-state refrigerant.

Accordingly, when the detected refrigerant volume flow Gr exceeds the threshold value Th for determination of refrigerant leakage which is set based on the maximum flow for the liquid-state refrigerant, it is determined that the refrigerant leaks, and a diagnosis result signal indicative of an occurrence of refrigerant leakage is output in step S8. Then, the process advances to step S9. Note that the diagnosis result signal may be output as warnings such as lighting of an alarm lamp.

In step S9, it is determined whether or not the air-conditioning switch is turned OFF. When the ON state continues, the process returns to step S3 and the diagnosis processing is continued. In the meantime, when it is determined that the air-conditioning switch is turned OFF, the diagnosis processing is finished.

Here, in a case in which, for example, the threshold value for determination of refrigerant leakage is set to a fixed value and is set to a low value, if the volume flow of the liquid-state refrigerant is large in a normal condition without any refrigerant leakage, a detected volume flow may exceed the threshold value and it may be wrongly determined that leakage occurs. On the other hand, in a case in which the threshold value is set to a high value, even if the refrigerant leakage occurs, a detected value of the volume flow is less than the threshold value and it may be difficult to give a diagnosis that the leakage occurs.

In contrast, in the present embodiment, even if the refrigerant flow varies according to the engine speed or the like, the threshold value Th for determination of refrigerant leakage is set to be changeable according to the operating condition of the air-conditioning device so as to reflect the variation. On this account, the refrigerant leakage can be diagnosed precisely without any restrictions from the operating condition.

In particular, in this embodiment, the threshold value Th for determination of refrigerant leakage Th is set by use of the outlet pressure Pd of the compressor, which is a parameter that could grasp a refrigerant flow most precisely only by itself. Thus, a precise refrigerant leakage diagnosis can be made by simple setting.

Furthermore, the expansion valve 3 is controlled so that its opening degree does not increase to a possible largest opening degree in a design normally while the air-conditioning device is being operated. Accordingly, the relationship between maximum flow and outlet pressure Pd in actual control may be obtained by an experiment or simulation, and the threshold value Th for determination of refrigerant leakage may be set based on the maximum flow corresponding to outlet pressure Pd.

Note that a map of the threshold values Th for determination of refrigerant leakage thus obtained may be set, so as to find a threshold value based on the outlet pressure Pd.

Furthermore, besides the outlet pressure Pd, the compressor rotational speed Nc, an environmental temperature (e.g., outside air temperature) Ta around the air-conditioning device which has an influence on a refrigerant state, or the like may be used together as parameters to set the threshold value Th for determination of refrigerant leakage. Even in this case, the threshold value Th for determination of refrigerant leakage can be set by setting a map or setting a multiple regression equation.

In a case in which a map is set by using the compressor rotational speed Nc, the outside air temperature Ta, or the like together, a main map for setting a basic threshold value based on the outlet pressure Pd and a correction map for correcting the basic threshold value by the compressor rotational speed Nc, the environmental temperature Ta, or the like are set as different maps, so that the threshold value Th for determination of refrigerant leakage can be set easily and precisely while reducing the total number of map data.

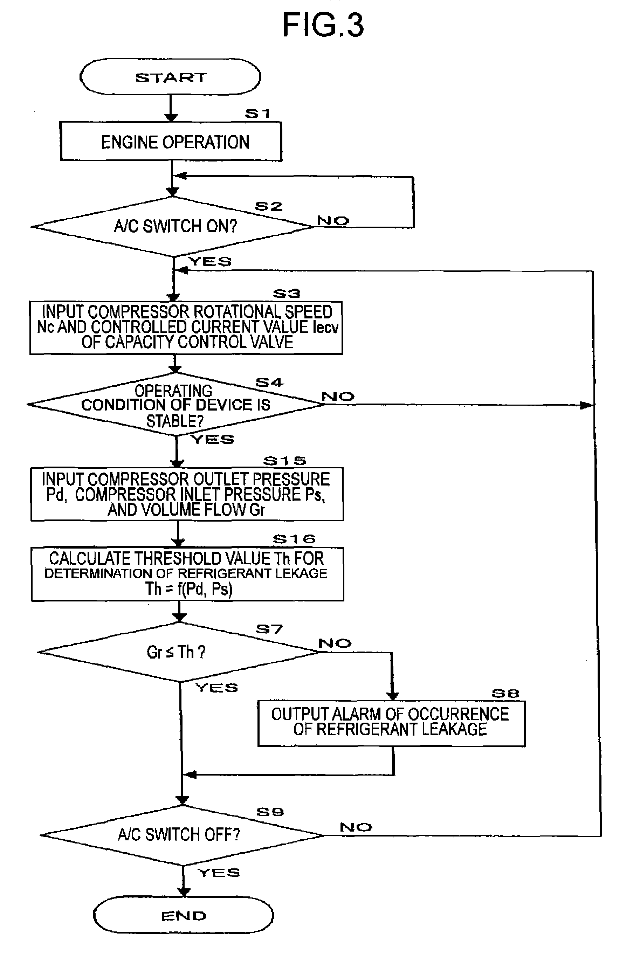

Fig. 3 illustrates a flow of a second embodiment of the refrigerant leakage diagnosis.

In this second embodiment, as illustrated in a broken line in Fig. 1, an inlet pressure sensor 25 for detecting an inlet pressure is disposed in the vicinity of an inlet of the compressor 1.

The process from step S1 to step S4 is the same as in the first embodiment. When it is determined that the operating condition of the air-conditioning device is stable, the process advances to step S15, in which an outlet pressure Pd and an inlet pressure Ps of the compressor 1, and a refrigerant volume flow Gr are input. Here, the inlet pressure Ps of the compressor 1 is a pressure on a low-pressure side of the vehicle air-conditioning device.

Subsequently, in step S16, a threshold value Th for determination of refrigerant leakage is calculated as a function f(Pd, Ps) of the outlet pressure Pd and the inlet pressure of the compressor 1.

As described above, the volume flow reaches its maximum flow when the opening degree of the expansion valve 3 is largest in an operating condition causing a differential pressure (= Pd - Ps) between the outlet and inlet of the compressor 1. In view of this, the threshold value Th for determination of refrigerant leakage is basically set based on this maximum flow.

Alternatively, similarly to the first embodiment, the relationship between maximum flow and differential pressure (Pd - Ps) between the outlet pressure Pd and the inlet pressure Ps in actual control is obtained by an experiment (a practical vehicle test, a bench test, etc.), simulation, or the like, and the threshold value Th for determination of refrigerant leakage may be set based on the maximum flow corresponding to differential pressure (Pd - Ps) thus obtained.

More specifically, with the use of variables X' and Y' obtained from test data of the characteristic of Gr with respect to the differential pressure (Pd - Ps) as illustrated in Fig. 7, the following formula can be set:

$$Th = X' \cdot (Pd - Ps)^{1/2} + Y'$$

A map of the threshold value Th for determination of refrigerant leakage may be set so as to find a threshold value based on the differential pressure (Pd - Ps), and besides the differential pressure (Pd - Ps), a compressor rotational speed Nc, an environmental temperature Ta, or the like may be further used as a parameter to set the threshold value Th for determination of refrigerant leakage. This is similar to in the first embodiment.

The process from step S7 to step S9 is the same as in the first embodiment.

That is, in step S7, a refrigerant volume flow Gr input in step S15 is compared with a threshold value Th for determination of refrigerant leakage Th set in step S16, and if it is determined that the refrigerant volume flow Gr is not less than the threshold value Th for determination of refrigerant leakage, a diagnosis result signal (alarm) indicative of an occurrence of refrigerant leakage is output in step S8, and this diagnosis flow is continued until it is determined that the air-conditioning switch is OFF in step S9.

According to the embodiment of the present invention, since the threshold value Th for determined of refrigerant leakage Th can be set based on the maximum flow obtained more highly precisely, based on the differential pressure (Pd - Ps) of the compressor 1, it is possible to diagnose whether or not any refrigerant leakage occurs, more precisely.

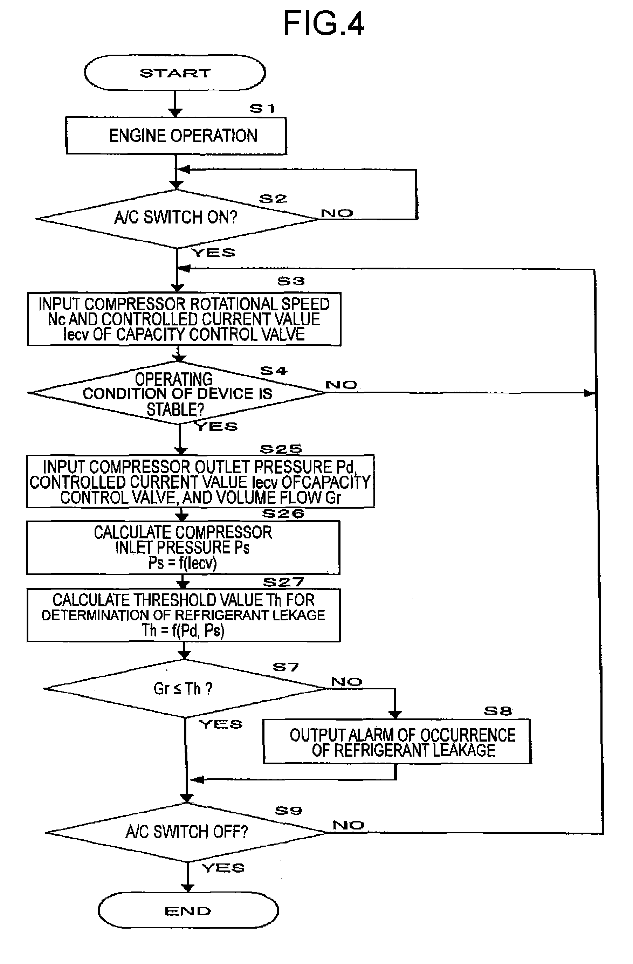

Fig. 4 illustrates a flow of a third embodiment of the refrigerant leakage diagnosis.

The process from step S1 to step S4 is the same as in the first embodiment. When it is determined that the operating condition of the device is stable, the process advances to step S25, in which an outlet pressure Pd of the compressor 1, a controlled current value lecv of the capacity control valve 1 a, and a refrigerant volume flow Gr are input.

In step S26, an inlet pressure Ps of the compressor 1 is estimated as f(lecv) based on a function value of the controlled current value lecv. As described above, the capacity control valve 1a drives a valve element for opening and closing communication between a discharge side and an inlet side by the controlled current value lecv, and controls a discharge volume in a variable manner by adjusting an intake pressure (= inlet pressure Ps). Accordingly, the controlled current value lecv correlates with the inlet pressure Ps of the compressor 1, so that the inlet pressure Ps of the compressor 1 can be estimated as a function value f(lecv) of the controlled current value lecv.

In step 27, a threshold value Th for determination of refrigerant leakage is set in a similar manner to step S16 of the second embodiment with the use of the detected outlet pressure Pd of the compressor 1 and the estimated inlet pressure Ps.

The process from step S7 to step S9 is the same as in the first and second embodiments.

That is, in step S7, the refrigerant volume flow Gr input in step S25 is compared with the threshold value Th for determination of refrigerant leakage Th set in step S26, and if it is determined that the refrigerant volume flow Gr is not less than the threshold value Th for determination of refrigerant leakage, a diagnosis result signal (alarm) indicative of an occurrence of refrigerant leakage is output in step S8, and this diagnosis flow is continued until it is determined that the air-conditioning switch is OFF in step S9.

According to the third embodiment, similarly to the second embodiment, since the threshold value Th for determination of refrigerant leakage can be set based on the maximum flow obtained more highly precisely, based on the differential pressure (Pd - Ps) of the compressor 1, it is possible to diagnose whether or not any refrigerant leakage occurs, more precisely.

Furthermore, since the inlet pressure Ps of the compressor 1 is estimated as f(lecv) based on a function value of the controlled current value lecv, an inlet pressure sensor is unnecessary, which can attain low costs. Note that a current sensor is unnecessary because a value set according to calculation in the A/C ECU 22 can be used as the controlled current value lecv.

Furthermore, as a modified embodiment of this third embodiment, an intake pressure may be controlled by the capacity control valve 1 a, so that a stroke of a plunger for discharging the refrigerant is ultimately controlled in a variable manner. In a case in which an inclined angle of a swash plate for adjusting this stroke is detected, the inlet pressure Ps of the compressor 1 can be estimated based on a detected value of this inclined angle (see, in particular, Japanese Laid-Open Patent Publication No. 2003-301772).

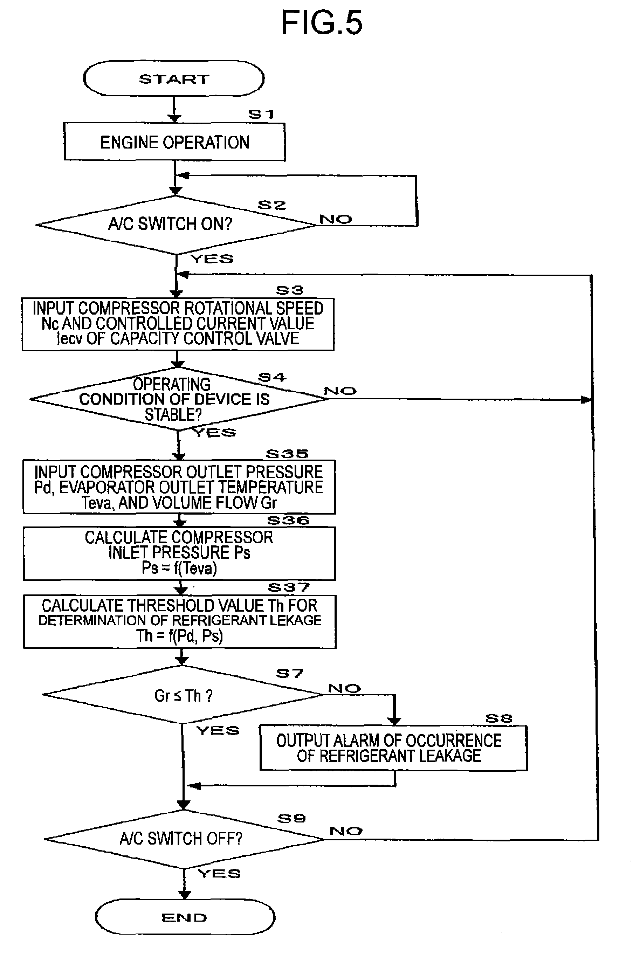

Fig. 5 illustrates a flow of a fourth embodiment of the refrigerant leakage diagnosis.

In this fourth embodiment, as illustrated in a single dotted chain line in Fig. 1, an outlet temperature sensor 26 for detecting an outlet temperature (refrigerant temperature or air temperature) Teva is disposed in the vicinity of an outlet of the evaporator 4.

The process from step S1 to step S4 is the same as in the first embodiment.

When it is determined that the operating condition of the air-conditioning device is stable in step S4, the process advances to step S35, in which an outlet pressure Pd of the compressor 1, an outlet temperature Teva of the evaporator 4, and a refrigerant volume flow Gr are input.

In step S36, the inlet pressure Ps of the compressor 1 is estimated as a function value f(Teva) of the outlet temperature Teva of the evaporator 4. A ratio between gas and liquid in the refrigerant changes inside the evaporator 4, but the temperature and the pressure are maintained to be substantially constant, and the outlet temperature Teva and the outlet pressure Peva of the evaporator 4 are correlated with each other.

The refrigerant discharged from the evaporator 4 is drawn into the compressor 1 while its state barely changes. On this account, the outlet pressure Peva of the evaporator 4 is substantially equal to the inlet pressure Ps of the compressor 1. In view of this, the inlet pressure Ps of the compressor 1 can be estimated as a function value f(Teva) of the outlet temperature Teva of the evaporator 4.

In step 37, a threshold value Th for determined of refrigerant leakage is set in a similar manner to step S16 of the second embodiment with the use of the detected outlet pressure Pd and the estimated inlet pressure Ps of the compressor 1.

The process from step S7 to step S9 is the same as in the first to third embodiments.

That is, in step S7, the refrigerant volume flow Gr input in step S35 is compared with the threshold value Th for determination of refrigerant leakage Th set in step S36, and if it is determined that the refrigerant volume flow Gr is not less than the threshold value Th for determination of refrigerant leakage, a diagnosis result signal (alarm) indicative of an occurrence of refrigerant leakage is output in step S8, and this diagnosis flow is continued until it is determined that the air-conditioning switch is OFF in step S9.

According to the fourth embodiment, similarly to the second and third embodiments, the threshold value Th for determination of refrigerant leakage Th can be set according to the maximum flow obtained more highly precisely, based on the differential pressure (Pd - Ps) of the compressor 1. This makes it possible to diagnose whether or not any refrigerant leakage occurs, more precisely.

Furthermore, in the air-conditioning device in which the outlet temperature Teva of the evaporator 4 is detected as a cooling air temperature, and control (refrigerant flow or the like) thereof is performed based on the cooling air temperature, the temperature sensor for the control can be diverted to thereby suppress an increase in cost.

Furthermore, although not illustrated here, as a fifth embodiment, in a case in which a target value of a refrigerant discharge volume of the compressor 1 is set and the refrigerant discharge volume is controlled to be closer to the target value, the threshold value Th for determination of refrigerant leakage may be set to, for example, a value slightly higher than the target value based on the target value of the refrigerant discharge volume.

In such a configuration, even if the refrigerant leaks in a small amount, it is possible to determine that refrigerant leakage occurs.

Furthermore, as illustrated in arrows in Figs. 6 and 7, the detected refrigerant volume flow Gr exceeds the threshold value Th for determination of refrigerant leakage and increases more as the refrigerant leaks more and a ratio of gaseous refrigerant increases. In view of this, in addition to the diagnosis result indicative of the occurrence of refrigerant leakage, a degree of refrigerant leakage may be calculated based on how much the refrigerant volume flow Gr exceeds the threshold value Th for determination of refrigerant leakage, and the degree of refrigerant leakage may be output. In this case, the degree of refrigerant leakage can be set based on, for example, Gr - Th or (Gr - Th)/Th as an index.

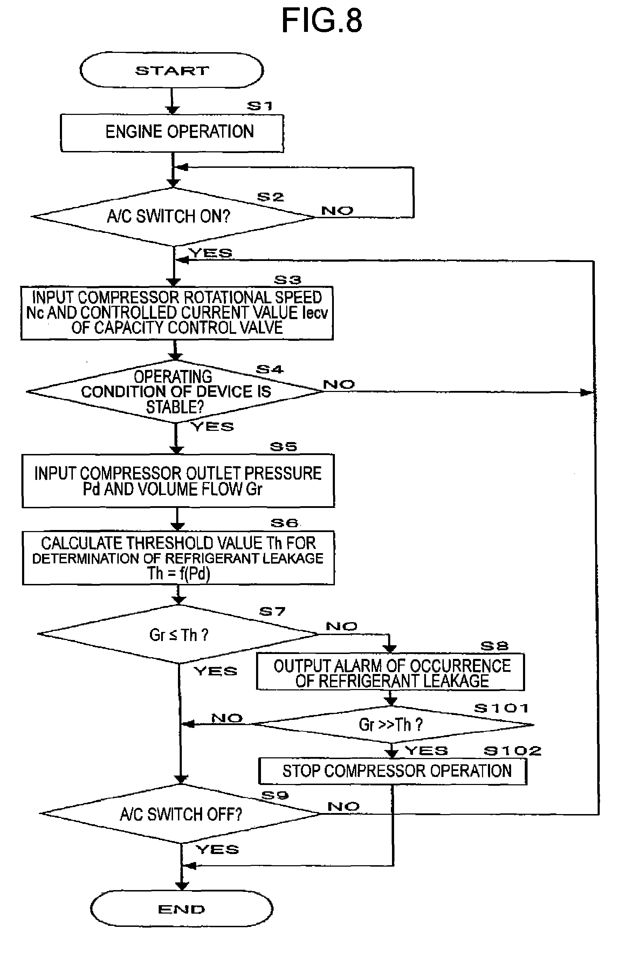

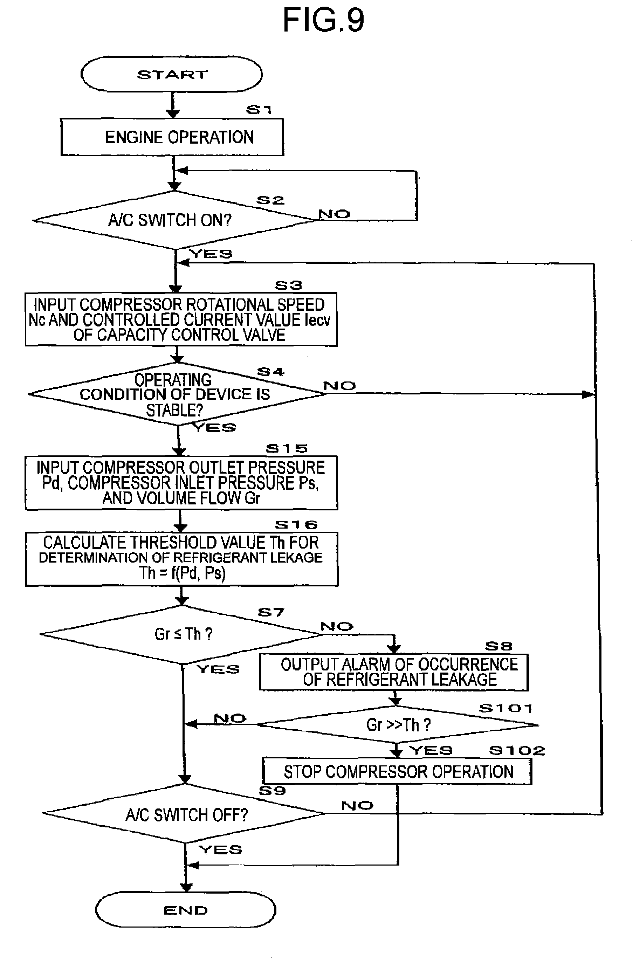

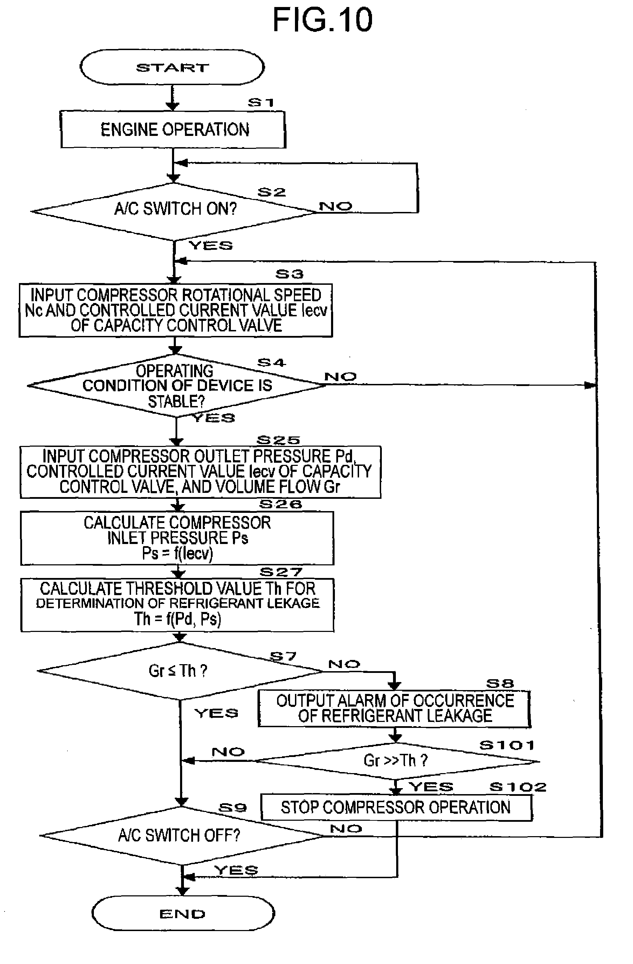

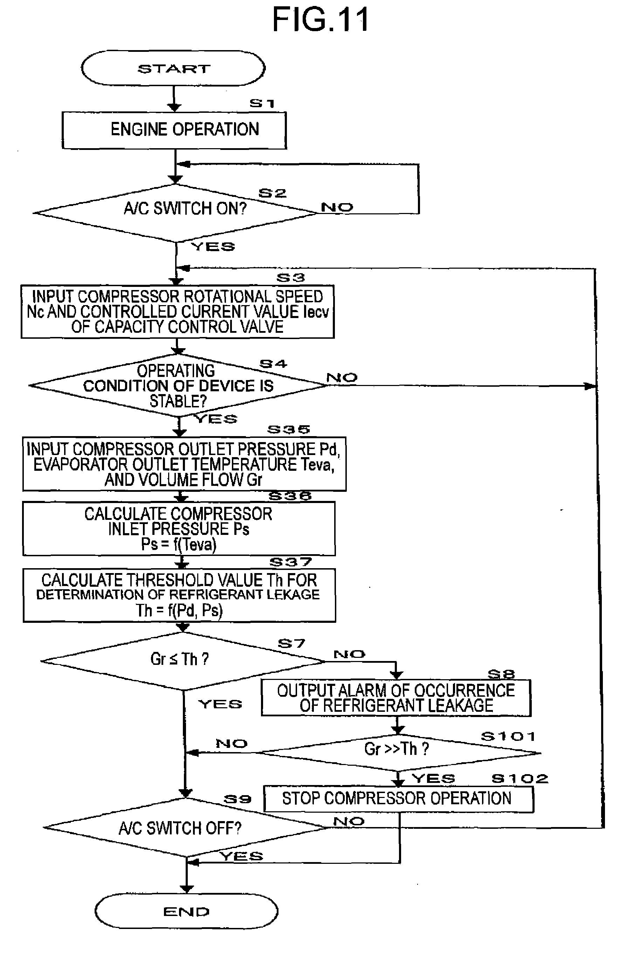

Furthermore, in correspondence with the first to fourth embodiments illustrated in Figs. 2 to 5, Figs. 8 to 11 illustrate fifth to eighth embodiments. In these fifth to eighth embodiments, when it is determined that the refrigerant volume flow Gr is greater than the threshold value Th for determination of refrigerant leakage and the occurrence of refrigerant leakage is diagnosed (steps S7 and 8), it is further determined whether or not the refrigerant volume flow Gr greatly exceeds the threshold value Th for determination of refrigerant leakage (step 101). If it is determined that the refrigerant volume flow Gr greatly exceeds the threshold value Th (exceeds a value obtained by adding a positive specified value to Th), an operation of the compressor 1 is stopped (step S102).

In this configuration, since the operation of the compressor 1 is stopped when a refrigerant leakage is large, it is possible to suppress a further increase in the leakage of the refrigerant by the operation. Thus, this configuration is more preferable.

DESCRIPTION OF REFERENCE NUMERALS

1 ... Compressor
1a ... Capacity control valve
2 ... Condenser
3 ... Expansion valve
4 ... Evaporator
5 ... Refrigerant pipe
6 ... Refrigerant flow sensor
21 ... Engine
22 ... A/C ECU
23 ... Rotational speed sensor
24 ... Engine ECU
25 ... Inlet pressure sensor of compressor 1
26 ... Outlet temperature sensor of evaporator 4
Pd ... Outlet pressure of compressor 1
Ps ... Inlet pressure of compressor 1
Gr ... Refrigerant volume flow
Iecv ... Controlled current value to capacity control valve 1 a
Th ... Threshold value for judgment of refrigerant leakage
Teva ... Outlet temperature of evaporator 4
Nc ... Rotational speed of compressor 1

**Claims**

1. A vehicle air-conditioning device in which a compressor, a condenser, an expansion valve, and an evaporator are connected in a circular manner through refrigerant pipes, the vehicle air-conditioning device comprising:

a refrigerant flow detecting unit for detecting a refrigerant volume flow in an area in which refrigerant circulates in a liquid state in the vehicle air-conditioning device;
a threshold setting unit for setting a threshold value for determination of refrigerant leakage in a variable manner based on an operating condition of the vehicle air-conditioning device; and
a refrigerant leakage determining unit for determining that the refrigerant is leaking, when the detected refrigerant volume flow exceeds the threshold value for determination of refrigerant leakage.

**2.** The vehicle air-conditioning device according to claim 1, wherein the threshold setting unit sets the threshold value for determination of refrigerant leakage in a variable manner based on parameters including a refrigerant pressure on a high-pressure side of the vehicle air-conditioning device.

**3.** The vehicle air-conditioning device according to claim 2, wherein the threshold setting unit sets the threshold value for determination of refrigerant leakage in a variable manner based on parameters including the refrigerant pressure on a high-pressure side and a refrigerant pressure on a low-pressure side of the vehicle air-conditioning device.

**4.** The vehicle air-conditioning device according to claim 3, wherein:

the compressor is a variable-capacity compressor for controlling a refrigerant discharge volume in a variable manner by a capacity control valve; and
the threshold setting unit estimates the refrigerant pressure on the low-pressure side of the vehicle air-conditioning device based on a control value of the capacity control valve.

**5.** The vehicle air-conditioning device according to claim 3, wherein: the threshold setting unit estimates the refrigerant pressure on the low-pressure side of the vehicle air-conditioning device based on a temperature detection value at an outlet of the evaporator.

**6.** The vehicle air-conditioning device according to claim 1, wherein:

the compressor is a variable-capacity compressor for controlling a refrigerant discharge volume in a variable manner; and
the threshold setting unit sets the threshold value for determination of refrigerant leakage in a variable manner based on parameters including a target value of the refrigerant discharge volume.

**7.** The vehicle air-conditioning device according to claim 1, wherein the threshold setting unit corrects a basis of the threshold value for determination of refrigerant leakage set according to each parameter, based on at least one of a rotational speed of the compressor and an environmental temperature around the vehicle air-conditioning device, and sets a final threshold value for determination of refrigerant leakage.

**8.** The vehicle air-conditioning device according to claim 1, wherein when the refrigerant leakage determining unit determines that the refrigerant is leaking, the refrigerant leakage determining unit calculates a degree of refrigerant leakage based on how much the refrigerant volume flow exceeds the threshold value for determination of refrigerant leakage, and outputs the degree of refrigerant leakage.

**9.** The vehicle air-conditioning device according to claim 1, wherein after determining a stable state of the vehicle air-conditioning device, the refrigerant leakage determining unit determines whether or not any refrigerant leakage occurs.

**10.** The vehicle air-conditioning device according to claim 1, wherein the refrigerant flow detecting unit is disposed in a refrigerant passage running from an outlet of the condenser to an inlet of the expansion valve in the vehicle air-conditioning device.

**11.** A refrigerant leakage diagnosis method for a vehicle air-conditioning device in which a compressor, a condenser, an expansion valve, and an evaporator are connected in a circular manner through refrigerant pipes, the method comprising:

detecting a refrigerant volume flow in an area in which refrigerant circulates in a liquid state in the vehicle air-conditioning device;
setting a threshold value for determination of refrigerant leakage in a variable manner based on an operating condition of the vehicle air-conditioning device; and
determining that the refrigerant is leaking when the detected refrigerant volume flow exceeds the threshold value for determination of refrigerant leakage.

# FIG.1

# FIG.2

START

S1
ENGINE OPERATION

S2
A/C SWITCH ON? — NO

YES

S3
INPUT COMPRESSOR ROTATIONAL
SPEED Nc AND CONTROLLED CURRENT
VALUE Iecv OF CAPACITY CONTROL VALVE

S4
OPERATING
CONDITION OF DEVICE IS
STABLE? — NO

YES

S5
INPUT COMPRESSOR OUTLET PRESSURE
Pd AND VOLUME FLOW Gr

S6
CALCULATE THRESHOLD VALUE Th FOR
DETERMINATION OF REFRIGERANT LEKAGE
Th = f(Pd)

S7
Gr ≤ Th ? — NO

YES

S8
OUTPUT ALARM OF OCCURRENCE
OF REFRIGERANT LEAKAGE

S9
A/C SWITCH OFF? — NO

YES

END

# FIG.3

START

**S1**
ENGINE OPERATION

**S2**
A/C SWITCH ON? — NO

YES

**S3**
INPUT COMPRESSOR ROTATIONAL SPEED Nc AND CONTROLLED CURRENT VALUE Iecv OF CAPACITY CONTROL VALVE

**S4**
OPERATING CONDITION OF DEVICE IS STABLE? — NO

YES

**S15**
INPUT COMPRESSOR OUTLET PRESSURE Pd, COMPRESSOR INLET PRESSURE Ps, AND VOLUME FLOW Gr

**S16**
CALCULATE THRESHOLD VALUE Th FOR DETERMINATION OF REFRIGERANT LEKAGE
Th = f(Pd, Ps)

**S7**
$Gr \leq Th$ ? — NO

YES

**S8**
OUTPUT ALARM OF OCCURRENCE OF REFRIGERANT LEAKAGE

**S9**
A/C SWITCH OFF? — NO

YES

END

# FIG.4

```
          ┌─────────────┐
          │    START    │
          └──────┬──────┘
                 │           S1
        ┌────────▼────────┐
        │ ENGINE OPERATION│
        └────────┬────────┘
                 │                              S2
          ◇─────────────────◇  NO ──────────────────┐
          │  A/C SWITCH ON? │                        │
          ◇─────────────────◇                        │
                 │ YES                                │
                 │                         S3         │
    ┌────────────▼────────────────────┐               │
    │ INPUT COMPRESSOR ROTATIONAL SPEED│               │
    │  Nc AND CONTROLLED CURRENT VALUE │               │
    │  Iecv OF CAPACITY CONTROL VALVE  │               │
    └────────────┬─────────────────────┘              │
                 │       S4                            │
          ◇─────────────────◇  NO ───────────────────►│
          │    OPERATING    │                          │
          │CONDITION OF DEVICE IS│                      │
          │      STABLE?    │                           │
          ◇─────────────────◇                          │
                 │ YES                                  │
                 │              S25                     │
    ┌────────────▼─────────────────────┐               │
    │INPUT COMPRESSOR OUTLET PRESSURE Pd,│              │
    │CONTROLLED CURRENT VALUE Iecv OFCAPACITY│          │
    │ CONTROL VALVE, AND VOLUME FLOW Gr │               │
    └────────────┬─────────────────────┘               │
                 │              S26                     │
    ┌────────────▼──────────┐                           │
    │ CALCULATE COMPRESSOR  │                           │
    │  INLET PRESSURE Ps    │                           │
    │    Ps = f(Iecv)       │                           │
    └────────────┬──────────┘                           │
                 │              S27                     │
    ┌────────────▼──────────────────┐                   │
    │ CALCULATE THRESHOLD VALUE Th FOR│                  │
    │DETERMINATION OF REFRIGERANT LEKAGE│                │
    │       Th = f(Pd, Ps)           │                  │
    └────────────┬──────────────────┘                   │
                 │        S7                             │
          ◇─────────────────◇  NO ──────┐               │
          │    Gr ≤ Th ?    │            │               │
          ◇─────────────────◇           ▼  S8           │
                 │ YES      ┌──────────────────────────┐│
                 │          │OUTPUT ALARM OF OCCURRENCE ││
                 │          │  OF REFRIGERANT LEAKAGE   ││
                 │          └─────────────┬────────────┘│
                 │◄───────────────────────┘             │
                 │        S9                             │
          ◇─────────────────◇  NO ───────────────────────┘
          │ A/C SWITCH OFF? │
          ◇─────────────────◇
                 │ YES
          ┌──────▼──────┐
          │     END     │
          └─────────────┘
```

Ps = f(Iecv)

Th = f(Pd, Ps)

Gr ≤ Th ?

12

# FIG.5

```
                    ┌─────────────────┐
                    │      START      │
                    └─────────────────┘
                             │
                             ▼                S1
                    ┌─────────────────┐
                    │ ENGINE OPERATION │
                    └─────────────────┘
                             │
                             ▼
                         ╱───────╲         S2
                       ╱  A/C SWITCH ╲  NO
                       ╲   ON?       ╱──────────┐
                         ╲─────────╱            │
                             │ YES              │
                             ▼                  │
                    ┌──────────────────────┐    │
                    │ INPUT COMPRESSOR      │ S3 │
                    │ ROTATIONAL SPEED Nc   │    │
                    │ AND CONTROLLED        │    │
                    │ CURRENT VALUE Iecv OF │    │
                    │ CAPACITY CONTROL VALVE│    │
                    └──────────────────────┘    │
                             │                  │
                             ▼                  │
                         ╱────────╲        S4   │
                       ╱ OPERATING  ╲  NO        │
                      ╱ CONDITION OF  ╲──────────┤
                      ╲ DEVICE IS     ╱          │
                       ╲ STABLE?    ╱            │
                         ╲────────╱              │
                             │ YES               │
                             ▼                   │
                    ┌────────────────────┐  S35  │
                    │ INPUT COMPRESSOR    │       │
                    │ OUTLET PRESSURE Pd, │       │
                    │ EVAPORATOR OUTLET   │       │
                    │ TEMPERATURE Teva,   │       │
                    │ AND VOLUME FLOW Gr  │       │
                    └────────────────────┘       │
                             │            S36     │
                             ▼                    │
                    ┌────────────────────┐        │
                    │ CALCULATE COMPRESSOR│       │
                    │ INLET PRESSURE Ps   │       │
                    │ Ps = f(Teva)        │       │
                    └────────────────────┘        │
                             │            S37      │
                             ▼                     │
                    ┌──────────────────────┐       │
                    │ CALCULATE THRESHOLD   │      │
                    │ VALUE Th FOR          │      │
                    │ DETERMINATION OF      │      │
                    │ REFRIGERANT LEKAGE    │      │
                    │ Th = f(Pd, Ps)        │      │
                    └──────────────────────┘       │
                             │                     │
                             ▼           S7         │
                         ╱────────╲   NO            │
                       ╱  Gr ≤ Th ? ╲───────┐       │
                       ╲───────────╱        │       │
                             │ YES          ▼       │
                             │      ┌──────────────┐│ S8
                             │      │ OUTPUT ALARM ││
                             │      │ OF OCCURRENCE ││
                             │      │ OF REFRIGERANT││
                             │      │ LEAKAGE      ││
                             │      └──────────────┘│
                             │◄────────────┘         │
                             ▼           S9          │
                         ╱────────╲   NO             │
                       ╱ A/C SWITCH ╲────────────────┘
                       ╲ OFF?       ╱
                         ╲────────╱
                             │ YES
                             ▼
                    ┌─────────────────┐
                    │      END        │
                    └─────────────────┘
```

# FIG. 6

THRESHOLD VALUE Th FOR DETERMINATION
OF REFRIGERANT LEAKAGE WHICH IS SET
ACCORDING TO CHARACTERISTIC OF OUTLET
PRESSURE Pd - REFRIGERANT FLOW AT
LARGEST OPENING DEGREE OF EXPANSION VALVE

□ : DATA OF PRACTICAL
     VEHICLE TEST

▲ : BENCH TEST DATA

THRESHOLD VALUE Th FOR
DETERMINATION OF REFRIGERANT
LEAKAGE WHICH IS SET BASED ON
MAXIMUM FLOW OF TEST DATA

REFRIGERANT
VOLUME FLOW Gr

LARGE

COMPRESSOR OUTLET PRESSURE Pd ⟶ LARGE

# FIG. 7

THRESHOLD VALUE Th FOR DETERMINATION
OF REFRIGERANT LEAKAGE WHICH IS SET
ACCORDING TO CHARACTERISTIC OF DIFFERENTIAL
PRESSURE (Pd -PS) - REFRIGERANT FLOW AT
LARGEST OPENING DEGREE OF EXPANSION VALVE

□ : DATA OF PRACTICAL
     VEHICLE TEST

▲ : BENCH TEST DATA

THRESHOLD VALUE Th FOR
DETERMINATION OF REFRIGERANT
LEAKAGE WHICH IS SET BASED ON
MAXIMUM FLOW OF TEST DATA

REFRIGERANT
VOLUME FLOW Gr

LARGE

COMPRESSOR OUTLET PRESSURE (Pd-Ps) ⟶ LARGE

# FIG.8

```
                    ┌─────────────────┐
                    │      START      │
                    └─────────────────┘
                             │
                             ▼         S1
                    ┌─────────────────┐
                    │ ENGINE OPERATION│
                    └─────────────────┘
                             │
                             ▼         S2
                        ╱─────────╲        NO
                   ╱ A/C SWITCH ON? ╲──────────┐
                        ╲─────────╱            │
                             │ YES             │
                             ▼         S3      │
           ┌──────────────────────────────┐   │
           │ INPUT COMPRESSOR ROTATIONAL   │   │
           │ SPEED Nc AND CONTROLLED       │   │
           │ CURRENT VALUE Iecv OF         │   │
           │ CAPACITY CONTROL VALVE        │   │
           └──────────────────────────────┘   │
                             │                 │
                             ▼         S4      │
                        ╱─────────╲     NO      │
                   ╱  OPERATING     ╲──────────┼───►
                   ╲ CONDITION OF   ╱          │
                   ╲ DEVICE IS      ╱          │
                      STABLE?                  │
                             │ YES             │
                             ▼         S5      │
           ┌──────────────────────────────┐   │
           │ INPUT COMPRESSOR OUTLET       │   │
           │ PRESSURE Pd AND VOLUME        │   │
           │ FLOW Gr                       │   │
           └──────────────────────────────┘   │
                             │                 │
                             ▼         S6      │
           ┌──────────────────────────────┐   │
           │ CALCULATE THRESHOLD VALUE Th  │   │
           │ FOR DETERMINATION OF          │   │
           │ REFRIGERANT LEAKAGE Th = f(Pd)│   │
           └──────────────────────────────┘   │
                             │                 │
                             ▼         S7      │
                        ╱─────────╲     NO      │
                   ╱   Gr ≤ Th ?   ╲────────┐   │
                        ╲─────────╱         │   │
                             │ YES          ▼   │
                             │      ┌────────────────┐ S8
                             │      │ OUTPUT ALARM OF│ │
                             │      │ OCCURRENCE OF  │ │
                             │      │ REFRIGERANT    │ │
                             │      │ LEAKAGE        │ │
                             │      └────────────────┘ │
                             │              │          │
                             │  NO     ╱─────────╲ S101 │
                             │◄────────  Gr >>Th ? ╲     │
                             │         ╲─────────╱      │
                             │              │ YES  S102  │
                             │      ┌────────────────┐   │
                             │      │ STOP COMPRESSOR│   │
                             │      │ OPERATION      │   │
                             │      └────────────────┘   │
                             ▼         S9      │          │
                        ╱─────────╲     NO      │          │
                   ╱ A/C SWITCH OFF?╲──────────┘          │
                        ╲─────────╱                       │
                             │ YES                         │
                             ▼◄──────────────────────────┘
                    ┌─────────────────┐
                    │       END       │
                    └─────────────────┘
```

# FIG.9

```
                    ( START )
                        │
                        ▼              S1
        ┌───────────────────────────────┐
        │       ENGINE OPERATION        │
        └───────────────────────────────┘
                        │◄──────────────────────────┐
                        ▼            S2              │
                    ╱──────────────╲     NO          │
                   ╱  A/C SWITCH ON? ╲────────────────┘
                    ╲──────────────╱
                        │ YES
                        ▼◄──────────────────────────────────────────────┐
                        │                                                │
                        ▼            S3                                  │
        ┌───────────────────────────────────────┐                       │
        │ INPUT COMPRESSOR ROTATIONAL SPEED      │                       │
        │ Nc AND CONTROLLED CURRENT VALUE Iecv   │                       │
        │     OF CAPACITY CONTROL VALVE          │                       │
        └───────────────────────────────────────┘                       │
                        │                                                │
                        ▼            S4                                  │
                 ╱──────────────────╲        NO                          │
                ╱     OPERATING       ╲──────────────────────────────────┤
                ╲ CONDITION OF DEVICE IS╱                                │
                 ╲     STABLE?       ╱                                    │
                        │ YES                                            │
                        ▼            S15                                 │
        ┌───────────────────────────────────────┐                       │
        │ INPUT COMPRESSOR OUTLET PRESSURE       │                       │
        │ Pd, COMPRESSOR INLET PRESSURE Ps,      │                       │
        │     AND VOLUME FLOW Gr                 │                       │
        └───────────────────────────────────────┘                       │
                        │                                                │
                        ▼            S16                                 │
        ┌───────────────────────────────────────┐                       │
        │ CALCULATE THRESHOLD VALUE Th FOR       │                       │
        │ DETERMINATION OF REFRIGERANT LEKAGE    │                       │
        │           Th = f(Pd, Ps)              │                       │
        └───────────────────────────────────────┘                       │
                        │                                                │
                        ▼            S7                                  │
                 ╱──────────────╲      NO                                │
                ╱   Gr ≤ Th ?    ╲──────────────┐                        │
                 ╲──────────────╱               ▼            S8          │
                        │ YES      ┌───────────────────────────────┐     │
                        │          │ OUTPUT ALARM OF OCCURRENCE     │     │
                        │          │   OF REFRIGERANT LEAKAGE       │     │
                        │          └───────────────────────────────┘     │
                        │                       │                        │
                        │                       ▼            S101        │
                        │◄──────────────╱──────────────╲                 │
                        │     NO       ╱   Gr >> Th ?    ╲                │
                        │              ╲──────────────╱                  │
                        │                       │ YES        S102        │
                        │          ┌───────────────────────────────┐     │
                        │          │  STOP COMPRESSOR OPERATION     │     │
                        │          └───────────────────────────────┘     │
                        ▼            S9                                   │
                 ╱──────────────╲      NO                                │
                ╱  A/C SWITCH OFF? ╲──────────────────────────────────────┘
                 ╲──────────────╱
                        │ YES
                        ▼◄───────────┘
                    (  END  )
```

# FIG.10

```
                    ┌─────────────┐
                    │    START    │
                    └──────┬──────┘
                           │         S1
              ┌────────────▼────────────┐
              │     ENGINE OPERATION    │
              └────────────┬────────────┘
                           │
                  ◇────────▼────────◇  S2
                 ╱                   ╲    NO
                ◇   A/C SWITCH ON?    ◇─────────┐
                 ╲                   ╱          │
                  ◇────────┬────────◇           │
                           │ YES                │
           ┌───────────────▼───────────────┐   │
           │  INPUT COMPRESSOR ROTATIONAL  │S3 │
           │ SPEED Nc AND CONTROLLED       │   │
           │ CURRENT VALUE Iecv OF         │   │
           │ CAPACITY CONTROL VALVE        │   │
           └───────────────┬───────────────┘   │
                  ◇─────────▼────────◇  S4      │
                 ╱  OPERATING         ╲    NO   │
                ◇  CONDITION OF DEVICE  ◇───────┤
                 ╲   IS STABLE?        ╱        │
                  ◇─────────┬─────────◇         │
                            │ YES               │
           ┌────────────────▼────────────────┐  │
           │ INPUT COMPRESSOR OUTLET         │S25
           │ PRESSURE Pd, CONTROLLED         │  │
           │ CURRENT VALUE Iecv OF CAPACITY  │  │
           │ CONTROL VALVE, AND VOLUME FLOW Gr│  │
           └────────────────┬────────────────┘  │
           ┌────────────────▼────────────────┐S26
           │     CALCULATE COMPRESSOR        │  │
           │     INLET PRESSURE Ps           │  │
           │     Ps = f(Iecv)                │  │
           └────────────────┬────────────────┘  │
           ┌────────────────▼────────────────┐S27
           │ CALCULATE THRESHOLD VALUE Th FOR│  │
           │ DETERMINATION OF REFRIGERANT    │  │
           │ LEKAGE Th = f(Pd, Ps)           │  │
           └────────────────┬────────────────┘  │
```

CALCULATE COMPRESSOR INLET PRESSURE Ps
$Ps = f(Iecv)$

CALCULATE THRESHOLD VALUE Th FOR DETERMINATION OF REFRIGERANT LEKAGE
$Th = f(Pd, Ps)$

S7  Gr ≤ Th ?  NO

S8  OUTPUT ALARM OF OCCURRENCE OF REFRIGERANT LEAKAGE

S101  Gr >> Th ?  NO / YES

S102  STOP COMPRESSOR OPERATION

S9  A/C SWITCH OFF?  NO / YES

END

# FIG.11

```
                    ┌─────────────┐
                    │    START    │
                    └──────┬──────┘
                           │              S1
                    ┌──────▼──────────┐
                    │ ENGINE OPERATION │
                    └──────┬──────────┘
                           │
                           │◄──────────────────────────┐
                           ▼        S2                  │
                    ◄ A/C SWITCH ON? ►──── NO ──────────┘
                           │
                          YES
                           │◄──────────────────────────────────────┐
                           ▼                S3                       │
            ┌──────────────────────────────────────┐                │
            │ INPUT COMPRESSOR ROTATIONAL SPEED      │                │
            │ Nc AND CONTROLLED CURRENT VALUE Iecv   │                │
            │      OF CAPACITY CONTROL VALVE         │                │
            └──────────────┬───────────────────────┘                │
                           ▼        S4                                │
                      ◄ OPERATING                                     │
                    CONDITION OF DEVICE IS ►──── NO ──────────────────┤
                         STABLE? ►                                    │
                           │                                          │
                          YES         S35                             │
            ┌──────────────────────────────────────┐                │
            │ INPUT COMPRESSOR OUTLET PRESSURE Pd,   │                │
            │ EVAPORATOR OUTLET TEMPERATURE Teva,    │                │
            │        AND VOLUME FLOW Gr              │                │
            └──────────────┬───────────────────────┘  S36            │
            ┌──────────────▼───────────────────────┐                │
            │     CALCULATE COMPRESSOR               │                │
            │       INLET PRESSURE Ps                │                │
            │          Ps = f(Teva)                  │                │
            └──────────────┬───────────────────────┘  S37            │
            ┌──────────────▼───────────────────────┐                │
            │ CALCULATE THRESHOLD VALUE Th FOR       │                │
            │ DETERMINATION OF REFRIGERANT LEKAGE    │                │
            │           Th = f(Pd, Ps)               │                │
            └──────────────┬───────────────────────┘                │
                           ▼         S7                               │
                    ◄  Gr ≤ Th ?  ►──── NO ──┐                        │
                           │                  ▼            S8         │
                          YES   ┌─────────────────────────────────┐  │
                           │    │ OUTPUT ALARM OF OCCURRENCE       │  │
                           │    │    OF REFRIGERANT LEAKAGE        │  │
                           │    └─────────────┬───────────────────┘  │
                           │   ◄──── NO ──── ◄  Gr >>Th ?  ► S101     │
                           │◄─────────────────┘      │               │
                           ▼                        YES      S102     │
                           │         ┌─────────────────────────────┐ │
                           │         │ STOP COMPRESSOR OPERATION    │ │
                           │         └─────────────┬───────────────┘ │
                           ▼         S9            │                  │
                    ◄ A/C SWITCH OFF? ►──── NO ────┴──────────────────┘
                           │
                          YES
                           ▼
                    ┌─────────────┐
                    │     END     │
                    └─────────────┘
```

| INTERNATIONAL SEARCH REPORT | International application No. |
|---|---|
| | PCT/JP2011/062211 |

A. CLASSIFICATION OF SUBJECT MATTER
*B60H1/22*(2006.01)i, *F25B49/02*(2006.01)i

According to International Patent Classification (IPC) or to both national classification and IPC

B. FIELDS SEARCHED

Minimum documentation searched (classification system followed by classification symbols)
B60H1/22, F25B49/02

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2011 |
| Kokai Jitsuyo Shinan Koho | 1971–2011 | Toroku Jitsuyo Shinan Koho | 1994–2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 5-118717 A (TGK Co., Ltd.),<br>14 May 1993 (14.05.1993),<br>paragraphs [0001] to [0034]; fig. 1 to 8<br>(Family: none) | 1,9-11<br>2-8 |
| X<br>Y | Microfilm of the specification and drawings annexed to the request of Japanese Utility Model Application No. 71424/1982(Laid-open No. 174669/1983)<br>(Nissan Motor Co., Ltd.),<br>22 November 1983 (22.11.1983),<br>page 3, line 10 to page 6, line 6; fig. 1 to 3<br>(Family: none) | 1,10,11<br>2-8 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 August, 2011 (08.08.11) | 16 August, 2011 (16.08.11) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/062211

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-232588 A  (Mitsubishi Electric Corp.), 02 October 2008 (02.10.2008), paragraph [0018] (Family: none) | 2-5,7 |
| Y | JP 2009-222272 A  (Mitsubishi Electric Corp.), 01 October 2009 (01.10.2009), paragraph [0024] (Family: none) | 2-5,7 |
| Y | JP 2004-34943 A  (TGK Co., Ltd.), 05 February 2004 (05.02.2004), paragraphs [0024] to [0025]; fig. 2 & US 2004/0003603 A1    & EP 1380456 A1 & DE 60300370 D | 2-5,7 |
| Y | JP 2009-63233 A  (TGK Co., Ltd.), 26 March 2009 (26.03.2009), paragraphs [0036] to [0038]; fig. 4 (Family: none) | 4 |
| Y | JP 2009-19777 A  (TGK Co., Ltd.), 29 January 2009 (29.01.2009), paragraph [0009] (Family: none) | 5 |
| Y | JP 7-17241 A  (Nissan Motor Co., Ltd.), 20 January 1995 (20.01.1995), paragraph [0017] (Family: none) | 6 |
| Y | JP 9-105567 A  (Denso Corp.), 22 April 1997 (22.04.1997), paragraphs [0022] to [0028]; fig. 2 (Family: none) | 8 |
| Y | JP 2010-48459 A  (Denso Corp.), 04 March 2010 (04.03.2010), paragraphs [0054] to [0083]; fig. 3 to 5 & DE 102009038273 A | 8 |

Form PCT/ISA/210 (continuation of second sheet) (July 2009)

**INTERNATIONAL SEARCH REPORT**

| International application No. |
| --- |
| PCT/JP2011/062211 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The search revealed that the matter common to the inventions in claims 1-10 are disclosed in the document 1 (JP 5-118717 A) and the document 2 (the microfilm of the specification and drawings annexed to the request of Japanese Utility Model Application No. 57-71424 (Laid-open No. 58-174669)) and therefore are not novel, or are addition, conversion, and so on of a well-known art or a commonly used art onto the techniques described in the documents 1,2 and therefore do not exhibit any new effect.
                                        (continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

| **INTERNATIONAL SEARCH REPORT** | International application No. |
| --- | --- |
| | PCT/JP2011/062211 |

Continuation of Box No.III of continuation of first sheet(2)


As a result, the above-said common matter is not a special technical feature within the meaning of PCT Rule 13.2, second sentence. It is optionally decided that the requirement of unity of invention is not required for the inventions in claims 1-5, 7, 9-11. However, since there is no other common matter, which is considered to be a special technical feature within the meaning of PCT Rule 13.2, second sentence, between the inventions in claims 6,8 and the invention in claim 1, any technical relationship within the meaning of PCT Rule 13 cannot be found among those different inventions.

Form PCT/ISA/210 (extra sheet) (July 2009)

**REFERENCES CITED IN THE DESCRIPTION**

**Patent documents cited in the description**

- JP H71995151432 B

- JP 2003301772 A